# EUROPÄISCHE PATENTANMELDUNG

(11) **EP 0 909 902 A2**
(43) Veröffentlichungstag der Anmeldung: **21.04.1999**
(21) Anmeldenummer: 98118883.2
(22) Anmeldetag: 06.10.1998
(51) Int. Cl.: F16D 48/06, B60K 41/02

(54) **Ausfallsichere Kupplungssteuerung für Fahrzeug mit automatisch betätigbarer Kupplung**

(30) Priorität: 17.10.1997 DE 19745676
(71) Anmelder: DaimlerChrysler AG, 70567 Stuttgart (DE)
(72) Erfinder: Grass, Thomas, 73660 Urbach (DE); Koch, Bernd, 71522 Backnang (DE); Kosik, Franz, 73760 Ostfildern (DE)

(57) **Zusammenfassung**

Bei einem Fahrzeug mit automatisch betätigbarer Kupplung wird sichergestellt, daß bei durch Fehlfunktion bedingtem Ausfall des durch Anschalten der Zündung gesetzten Aktivierungssignales für das Kupplungssteuergerät (2) dieses durch ein Ersatzsignal ersetzt wird, das aus den Funktionen eines anderen bei angeschalteter Zündung aktivierten Steuergerätes (13 bis 16) des Fahrzeuges ableitbar ist, die im Fahr- oder Motorbetrieb des Fahrzeuges anfallen, und durch das für das Kupplungssteuergerät (2) der Normalbetrieb bis zum Abschalten der Zündung aufrechterhalten wird.

## Beschreibung

Die Erfindung betrifft ein Fahrzeug gemäß dem Oberbegriff des Anspruches 1.

Fahrzeuge der vorgenannten Art mit automatischer Kupplungsbetätigung sind bekannt, und im Regelfall sind bei derartigen Fahrzeugen, wie auch bei anderen modernen Fahrzeugen eine Reihe von Steuergeräten vorhanden, die meist in Verbindung mit dem Einschalten der Zündung angeschaltet (aktiviert) und auch abgeschaltet (deaktiviert) werden. Aktivierungssignal und Deaktivierungssignal sind also vom Fahrer gesetzte Signale. Bekannt ist es auch, Aktivierungssignale durch Betätigen des Bremspedales zu setzen.

Mit der Deaktivierung, die durch Abschalten über den Zündschalter erfolgt, wird bei Fahrzeugen mit automatisch betätigter Kupplung das Kupplungssteuergerät nicht sofort stillgesetzt, sondern es werden noch den Gebrauch des Fahrzeuges abschließende Funktionen, wie eine 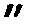 Parkfunktion" angestoßen. Durch die Parkfunktion wird die Kupplung zeitgesteuert geschlossen, und somit bei eingelegtem Gang ein Wegrollen des Fahrzeuges verhindert.

Sind mit der Deaktivierung Zusatzfunktionen angestoßen, die einen weiteren, insbesondere auch sicheren Fahrbetrieb unter Umständen beeinträchtigen können, dann erweisen sich entsprechende Warnungen an den Fahrer als nötig, damit dieser nicht unbewußt in Gefahr gerät.

Verhindert werden muß auch, daß mit Ausfall des Aktivierungssignales mit der Deaktivierung verbundene Zusatz-funktionen angestoßen werden.

Mit ähnlichen Problemen der Betriebssicherheit befaßt sich die DE 42 37 983 A1, wobei hier Ausgangspunkt ist, daß herkömmliche Steueranordnungen für automatisierte Reibungskupplungen eine Vielzahl von Sensoren und Aktuatoren benötigen und daß bei Defekt auch nur eines einzigen Sensors oder eines einzigen Aktuators in der Regel das gesamte System nicht mehr betriebsfähig ist. Um diesem Nachteil zu begegnen, werden bei dieser bekannten Lösungen Sensoren und Aktuatoren auf Ausfall bzw. im Hinblick auf die Plausibilität ihrer Signale überwacht und es wird bei Erkennen eines Fehlers eines Sensors die Funktion eines anderen Sensors genutzt, um - unter geändertem Funktionsablauf der Steueranordnung - einen in der Funktion reduzierten Betrieb als Notbetrieb aufrechtzuerhalten.

Prinzipiell gleiche Gegebenheiten sind auch bei einer aus der DE 42 31 821 A1 bekannten Lösung vorhanden. Bei Auftreten von Fehlfunktionen wertet ein Ersatzsteuerkreis Sensorsignale einer anderen, fehlerfrei arbeitenden Bedienungseinheit aus, um aus diesen ersatzweise geeignete Stellsignale für die Ansteuerkreise abzuleiten. Dabei kommen die Signale des Ersatzsteuerkreises nur dann zum Tragen, wenn vorab ein Fehlerzustand detektiert ist, wobei Signalfehler auch durch Verwendung redundanter Abtastmittel zur Erfassung der Einstellage der Bedienelemente und darauf aufbauende Plausibilitätsbetrachtungen festgestellt werden können. Hierzu können einem Bedienelement gegebenenfalls redundant zwei Sensoren oder dergleichen zur Erfassung des gleichen Sachverhaltes zugeordnet sein. Solche Redundanzen erfordern einen erhöhten Aufwand, und ein solcher ist zumindest im steuertechnischen Bereich auch für die angesprochenen Plausibilitätsüberwachungen erforderlich.

Durch die Erfindung soll demgegenüber ein Sicherungskonzept bei Fahrzeugen mit automatischer Kupplungsbetätigung geschaffen werden, durch das ohne derartigen Zusatzaufwand auch ein durch Fehlfunktionen bedingter Ausfall des durch Einschalten der Zündung gesetzten Aktivierungssignales für das Kupplungssteuergerät ohne Beeinträchtigung der Fahrbarkeit des Fahrzeuges und dessen sichere Handhabung beherrscht werden kann.

Gemäß der Erfindung geschieht dies dadurch, daß ebenso wie das Kupplungssteuergerät durch Einschalten der Zündung für den Fahrbetrieb aktivierte Steuergeräte, wie beispielsweise das Motorsteuergerät oder das Bremssteuergerät als Geber des Aktivierungssignales für das Kupplungssteuergerät herangezogen werden. Die Erfindung bietet damit die Möglichkeit, auch bei Ausfall des über den Zündschalter gesetzten Aktivierungssignales durch Fehlfunktion in der Signalübertragung zwischen Zündschalter und Kupplungssteuergerät, beispielsweise bei Leitungsbruch oder bei Durchbrennen der den Zündschalter absichernden Sicherung, das Kupplungssteuergerät anzusprechen und im angeschalteten Zustand zu halten, also den Normalbetrieb für das Kupplungsgerät aufrechtzuerhalten und dessen Deaktivierung zu vermeiden, bis der Fahrer mit einer gezielten Deaktivierung durch Abschalten der Zündung auch die sonstigen über den Zündschalter aktivierbaren Steuergeräte abschaltet. Mit dieser Deaktivierung werden dann auch bezüglich des Kupplungssteuergerätes die Funktionen eingeleitet, die mit dem Abschalten der Zündung üblicherweise verbunden sind.

Weitere Einzelheiten und Merkmale der Erfindung ergeben sich aus den Ansprüchen. Desweiteren wird die Erfindung in der nachfolgenden Beschreibung noch näher erläutert.

Die für das Ausführungsbeispiel gewählte Schemadarstellung zeigt für ein Fahrzeug mit automatischer Kupplungsbetätigung lediglich das Kupplungssteuergerät 1, und die diesem zugeordnete Anschlußbox 2 für die elektrischen Anschlüsse. Auf die Anschlußbox 2 sind Leitungen 5 bis 8 geführt, von denen die Leitung 5 den Anschluß an den Zündschalter 4 des Zündschloßes 3, also den üblicherweise als Klemme 15 bezeichneten Anschluß zeigt. Die Leitungen 6 und 7 symbolisieren den Anschluß an die Spannungsversorgung, die hier symbolisch durch eine Batterie 9 dargestellt ist, an deren Pluspol 10 die Leitung 6 (Anschluß an Klemme 30) geführt ist, während die Leitung 7 mit dem Minuspol 11 (Anschluß an Klemme 31) verbunden ist. Die Leitung 8 symbolisiert die Verbindung zu einem sogenannten CAN-Bus 12, über den die einzelnen Steuergeräte untereinander verknüpft sind, so beispielsweise das Motorsteuergerät 13, das Bremssteuergerät 14, das Klimasteuergerät 15 und das Kombi-Instrument 16, deren Anschluß an die Spannungsversorgung - Batterie 9 - und den Zündschalter 4, analog zu den zum Kupplungssteuergerät 2 führenden Leitungen 5, 6, 7 durch Leitungen 25, 26, 27 symbolisch angedeutet ist. Den Anschluß des Zündschloßes 3 bzw. des Zündschalters 4 an die Spannungsversorgung - Batterie 9 - veranschaulicht die Leitung 17.

Wird die Zündung ausgeschaltet, so ist damit bekanntlich das Abschalten des hier nicht dargestellten Motores und der mit diesem verknüpften Aggregate verbunden, so auch des Kupplungssteuergerätes 1 und der sonstigen Steuergeräte 13 bis 16. Aktivierung und Deaktivierung des Kupplungssteuergerätes 1 und der sonstigen Steuergeräte 13 bis 16 erfolgt im Ausführungsbeispiel, wie üblich, über das Zündschloß 3 durch den Fahrer, wobei das Aktivierungssignal mit dem Zuschalten der Zündung gesetzt wird, und das Deaktivieren mit dem Abschalten der Zündung.

Bricht die Leitung 5, oder fällt die Sicherung aus, über die die Leitung 5 und der Anschluß der Leitung 5 an den Zündschalter 4 (Klemme 15) abgesichert sind, so kommt diese Fehlfunktion, bezogen auf das Kupplungssteuergerät 2, im Ergebnis einem Abschalten der Zündung, und damit einer Deaktivierung gleich. Die übrigen Steuergeräte 13 bis 16 sind aber über die vorhandenen Leitungsverbindungen 25 bis 27 nach wie vor an die Spannungsversorgung - Batterie 9 - wie auch an den Zündschalter 4 angeschlossen, und somit - entsprechend der zugeschalteten Zündung - aktiviert. Diese - unabhängig von der Fehlfunktion im Ansprechweg zwischen Zündschloß 3 und Steuergerät 2 - aktivierten Steuergeräte 13 bis 16 werden im Rahmen der Erfindung zumindest bezüglich eines Signales als Ersatzsignalgeber für das Aktivierungssignal des Kupplungssteuergerätes 2 genutzt, und stellen quasi redundant zu dem über den Zündschalter 4 direkt zur Verfügung gestellten Aktivierungssignal (Leitung 5) ein Ersatzsignal zur Verfügung, über das das Kupplungssteuergerät 2 trotz der Fehlfunktion in der Signalzuführung über den Zündschalter 4 derart angesteuert ist, daß der Normalbetrieb des Kupplungssteuergerätes 2, also dessen volle Funktion gesichert ist. Der im Hinblick auf die eingeschaltete Zündung nicht plausible Ausfall des vom Zündschalter 4 ausgehenden Aktivierungssignales für das Kupplungssteuergerät 2 bei Aufrechterhaltung des Arbeitsbetriebes für die sonstigen Steuergeräte 13 bis 16 wird im Rahmen der Erfindung dahingehend korrigiert, daß über eines oder mehrere der sonstigen Steuergeräte 13 bis 16 für das Kupplungssteuergerät 2 ersatzweise ein Aktivierungssignal zur Verfügung gestellt wird.

Damit wird verhindert, daß bei Ausfall des Kupplungssteuergerätes 2 Steuerfunktionen eingeleitet werden, die bezogen auf den jeweiligen Zustand des Fahrzeuges unerwünscht sind, so beispielsweise das Anstoßen einer sogenannten Parkfunktion, die bei regulärer Deaktivierung des Kupplungssteuergerätes durch den Fahrer (Ausschalten der Zündung) in der Regel während einer kurzen Nachlaufzeit angestoßen wird und eine Sicherung des Fahrzeuges gegen ungewolltes Wegrollen bewirkt.

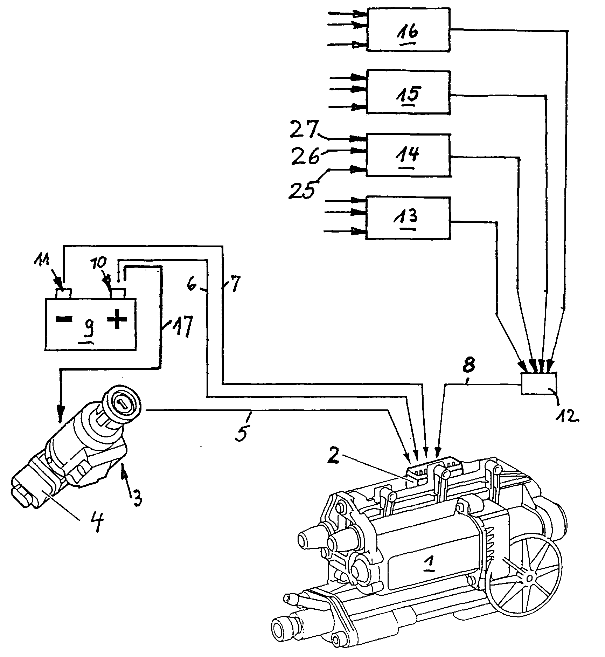

## Patentansprüche

1. Fahrzeug mit automatisch betätigbarer Kupplung, die im Triebstrang zwischen Motor und Getriebe angeordnet ist, einer der Kupplung zugeordneten Stellvorrichtung, einer Spannungsguelle, einem Zündschloß mit Zündschalter und mit mehreren Steuergeräten für Fahrzeug- und/oder Motorfunktionen, die durch Anschalten des Zündschalters aktivierbar und durch Abschalten des Zündschalters deaktivierbar sind und von denen eines ein Kupplungssteuergerät ist, das bei Deaktivierung den Fahrbetrieb verhindernde Zusatzfunktionen anstößt,
**dadurch gekennzeichnet,** daß bei angeschaltetem Zündschalter (4) und Ausfall der Signalübertragung zwischen Zündschalter (4) und Kupplungssteuergerät (1) eines der Signale eines weiteren Steuergerätes (13 bis 16) derart als Ersatzsignal für das ausgefallene, vom Zündschalter (4) ausgehende Aktivierungssignal nutzbar ist, daß das Kupplungssteuergerät (1) aktiviert bleibt.

2. Fahrzeug nach Anspruch 1,
**dadurch gekennzeichnet,** daß als weiteres Steuergerät ein Motorsteuergerät (13), ein Bremssteuergerät (14), ein Klimasteuergerät (15) und/oder ein Kombi-Instrument (16) nutzbar sind.
